# EUROPÄISCHE PATENTSCHRIFT

(11) **EP 2 988 071 B1**
(45) Veröffentlichungstag und Bekanntmachung des Hinweises auf die Patenterteilung: **22.06.2016**
(21) Anmeldenummer: 14181388.1
(22) Anmeldetag: 19.08.2014
(51) Int. Cl.: F24D 19/10, G05D 7/01, F16K 1/52

(54) **Durchflussmengenregler**
Flow regulator
Régulateur de débit

(43) Veröffentlichungstag der Anmeldung: 24.02.2016
(73) Patentinhaber: IMI Hydronic Engineering International SA, 1262 Eysins (CH)
(72) Erfinder: Schmidt, Carina, 45138 Essen (DE); Henke, Bernhard, 59929 Brilon (DE); Essfeld, Fritz, 59581 Warstein (DE); Trantham, John M., Hurst, TX Texas 76053 (US)
(74) Vertreter: Wickord, Wiro

(56) Entgegenhaltungen:
- EP-A2- 1 353 254
- WO-A1-2011/006559
- DE-A1-102007 013 505
- DE-A1-102010 032 011
- DE-A1-102011 107 273

## Beschreibung

Die Erfindung betrifft einen voreinstellbaren Durchflussmengenregler für eine Heizungsanlage mit einem Gehäuse, welches einen Zulaufstutzen für ein Heizmedium, einen Ablaufstutzen für das Heizmedium und einen Voreinstellstutzen aufweist, mit einem Mengenreguliermodul, welches in Abhängigkeit von einer Voreinstellung und einer Druckdifferenz einen Durchfluss für das Heizmedium verändert, und mit einer Handhabe, welche mit einem beweglich angeordneten Bauteil des Mengenreguliermoduls zusammenwirkt zur Voreinstellung des Durchflusses, wobei zur Änderung der Voreinstellung des Durchflusses mittels der Handhabe ein wirksamer Querschnitt einer ersten Durchflussöffnung für das Heizmedium einstellbar ist und wobei zur Regelung des voreingestellten Durchflusses des Heizmediums eine Hülse des Mengenreguliermoduls und ein Topf des Mengenreguliermoduls, welche über eine Vorspannfeder federbelastet zueinander vorgesehen sind, zueinander axial verschiebbar angeordnet sind und in Abhängigkeit einer Axialposition, welche mit der Druckdifferenz variiert, ein Querschnitt einer zweiten Durchflussöffnung für das Heizmedium veränderbar ist.

Aus der deutschen Patentanmeldung 10 2009 033 376.2 ist ein gattungsgemäßer Durchflussmengenregler bekannt. Der Durchflussmengenregler sieht vor, dass über eine dem Voreinstellstutzen zugeordnete, drehbare Handhabe der Durchfluss des Heizmediums mengenmäßig eingestellt wird. Hierzu wird eine Relativposition zwischen einem von dem Heizmedium durchströmten Topf des Durchflussmengenreglers, welcher in einer Stirnseite eine Ausnehmung aufweist, und einem in die Ausnehmung jedenfalls abschnittsweise eingreifenden Kegel verändert. Zur Regelung der voreingestellten Durchflussmenge ist eine verschiebbar in Bezug zu dem Kegel und dem Topf angeordnete Hülse vorgesehen, wobei die Relativbewegung in Abhängigkeit der Druckdifferenz in dem Durchflussmengenregler erfolgt. Die Hülse gibt einen Querschnitt einer ersten Durchflussöffnung für das Heizmedium, über die dieses dem Mengenreguliermodul zugeführt wird, vollständig oder teilweise frei. Mit der Veränderung des Querschnitts der ersten Durchflussöffnung für das Heizmedium wird der Durchfluss erhöht beziehungsweise reduziert. In der Folge ändert sich die Druckdifferenz, welche über der zwischen dem Kegel und der an dem Topf vorgesehenen Ausnehmung gebildeten zweiten Durchflussöffnung auftritt. Die mittels einer Feder gegen den Topf vorgespannte Hülse verschiebt sich mit der Änderung der Druckdifferenz so, dass ein Querschnitt der zweiten Durchflussöffnung für das Heizmedium der Strömungssituation angepasst eingestellt wird. Dokument DE 10 2009033 376 offenbart die Merkmale des Oberbegriffs des Anspruchs 1.

Der aus dem Stand der Technik bekannte Aufbau des Durchflussmengenreglers hat sich grundsätzlich bewährt und in der Praxis weite Verbreitung gefunden. Gleichwohl ist es Aufgabe der vorliegenden Erfindung, einen gattungsgemäßen Durchflussmengenregler kompakter zu konstruieren und die Möglichkeit zu schaffen, ihn in ein Gehäuse zu verbauen, welches nur einen geringen Bauraum zur Verfügung stellt.

Zur Lösung der Aufgabe ist die Erfindung in Verbindung mit dem Oberbegriff des Patentanspruchs 1 dadurch gekennzeichnet, dass der Zufluss zu dem Mengenreguliermodul mantelseitig erfolgt über die an der Hülse vorgesehene erste Durchflussöffnung.

Der besondere Vorteil der Erfindung besteht darin, dass durch das mantelseitige Vorsehen der ersten Durchflussöffnung insbesondere eine axiale Länge des Mengenreguliermoduls kleiner ausgeführt werden kann und demzufolge der Bauraumbedarf zur Unterbringung des Mengenreguliermoduls sinkt. Es gelingt insofern, den erfindungsgemäßen Durchflussmengenregler mit einem Standardgehäuse aufzubauen, welches im Rahmen der Installation von Heizungsanlagen regelmäßig zur Anwendung kommt und beispielsweise T-Stück-förmig ausgebildet ist. Die kompakte Bauform reduziert insofern den Bauraumbedarf bei der Neuinstallation von Heizungsanlagen. Darüber hinaus werden die Umrüstung bestehender Heizungsanlagen und das erstmalige Vorsehen eines erfindungsgemäßen Durchflussmengenreglers in diesen bestehenden Anlagen begünstigt. Insbesondere gelingt es, das Gehäuse eines Thermostatventils zu verwenden und in diesem Gehäuse zusätzlich die Durchflussmengenregelung zu realisieren.

Nach einer bevorzugten Ausführungsform der Erfindung wirkt die Handhabe mit einem verschiebbar in Bezug zu der Hülse angeordneten Reguliereinsatz zusammen. In Abhängigkeit einer Relativposition von Hülse und Reguliereinsatz wird der wirksame Querschnitt der ersten Durchflussöffnung definiert. Insbesondere kann der Reguliereinsatz drehbar in Bezug zu der Hülse beziehungsweise dem Topf des Mengenreguliermoduls vorgesehen sein. Vorteilhaft reduziert sich der Bauraumbedarf weiter, wenn der Reguliereinsatz drehbar in Bezug zur Hülse beziehungsweise zum Topf vorgesehen wird. Insbesondere der Verzicht auf eine Axialverschiebung macht den Aufbau des Mengenreguliermoduls sehr kompakt, da die Verdrehung innerhalb eines durch den Topf beziehungsweise die Hülse definierten Wirkraums des Mengenreguliermoduls realisiert werden kann. Insbesondere ändert sich der Bauraumbedarf beziehungsweise die Größe des Mengenreguliermoduls nicht in Abhängigkeit des Werts der Voreinstellung der Durchflussmenge.

Nach einer Weiterbildung der Erfindung greift der Reguliereinsatz mit einem Steuerabschnitt desselben in die Hülse. Eine Innenmantelfläche der Hülse liegt hierbei flächig an einer Außenmantelfläche des Steuerabschnitts an. Insbesondere sieht der Steuerabschnitt des Reguliereinsatzes eine Steuerkontur vor, welche abhängig von einer Drehstellung des Reguliereinsatzes die erste Durchflussöffnung für das Heizmedium vollständig freigibt oder jedenfalls teilweise überdeckt. Abhängig von der Drehstellung ergibt sich dann die Voreinstellung für die Durchflussmenge des Heizmediums. Vorteilhaft kann durch das Vorsehen der Steuerkontur und durch die geeignete geometrische Gestaltung derselben eine sehr feine Einstellung des Querschnitts der ersten Durchflussöffnung realisiert werden. Die Durchflussmenge lässt sich insofern in einem weiten Bereich variieren und exakt voreinstellen.

Nach einer Weiterbildung der Erfindung umgibt die Hülse den Topf mantelseitig jedenfalls abschnittsweise. Insbesondere ist die Hülse ortsfest vorgesehen und der Topf axial verschiebbar in der Hülse gehalten. Vorteilhaft erfolgt die axiale Verschiebung des Topfes relativ zur Hülse innerhalb des Wirkraums des Mengenreguliermoduls. Es wird somit die kompakte Bauform weiter begünstigt und die Integration des Mengenreguliermoduls in einem nur kleinen Bauraum ist möglich. Die Hülse definiert insofern das Volumen für den Wirkraum des Mengenreguliermoduls. Sie hat einen wesentlichen Einfluss auf den Bauraumbedarf des Mengenreguliermoduls. Der verschiebbar gehaltene Topf ist demgegenüber von der Hülse umgriffen. Er hat keinen oder allenfalls untergeordneten Einfluss auf die Baugröße und die Kompaktheit des Mengenreguliermoduls.

Die zur Regelung des voreingestellten Durchflusses vorgesehene zweite Durchflussöffnung ist nach einer Weiterbildung der Erfindung zwischen dem Reguliereinsatz und dem Topf gebildet. Insbesondere hat die zweite Durchflussöffnung die Form eines Axialspalts. Bevorzugt ist der Axialspalt als zylindrischer Ringspalt ausgebildet, wobei der zylindrische Ringspalt eine konstante axiale Breite aufweist. Die Breite des Axialspalts und damit der Querschnitt der zweiten Durchflussöffnung variiert in Abhängigkeit der Druckverhältnisse in dem Mengenreguliermodul. Es gelingt insofern, den über den Querschnitt der ersten Durchflussöffnung definierten und voreingestellten Durchfluss für das Heizmedium sehr feinfühlig zu regeln.

Zum Führen des relativ zur Hülse verschiebbaren Topfes sieht der Reguliereinsatz einen Stützabschnitt vor. Der Topf ist außenmantelseitig im Bereich einer ersten Stützstelle an der Hülse und im Bereich einer zweiten Stützstelle innenmantelseitig an dem Stützabschnitt des Reguliereinsatzes angelegt. Die erste Stützstelle und die zweite Stützstelle können axial beabstandet zueinander vorgesehen werden. Vorteilhaft ergibt sich durch die Abstützung des Topfes an der Hülse einerseits und dem Stützabschnitt des Reguliereinsatzes andererseits eine sehr kompakte Bauform. Darüber hinaus ergibt sich eine Relativposition des Topfes zu der Hülse einerseits und zu dem Reguliereinsatz andererseits. Hierdurch werden Toleranzen, welche sich negativ auf die Funktion des Durchflussmengenreglers auswirken können, reduziert beziehungsweise eliminiert. Es bilden sich zudem gleichmäßige Strömungsverhältnisse in dem Mengenreguliermodul aus, welche eine sichere Funktion und Zuverlässigkeit begünstigen und einem Verkanten des Topfes entgegenwirken.

Aus den weiteren Unteransprüchen und der nachfolgenden Beschreibung sind weitere Vorteile, Merkmale und Einzelheiten der Erfindung zu entnehmen. Die Zeichnungen dienen lediglich beispielhaft der Klarstellung der Erfindung und haben keinen einschränkenden Charakter.

Ausführungsbeispiele der Erfindung werden nachfolgend anhand von Zeichnungen näher erläutert.

Es zeigen:
- Fig. 1: eine Schnittdarstellung durch einen erfindungsgemäßen Durchflussmengenregler, wobei in einem Gehäuse des Durchflussmengenreglers zusätzlich ein Temperaturregelmodul eines Temperaturreglers vorgesehen ist, und
- Fig. 2: eine Detailvergrößerung eines Ausschnitts X nach Fig. 1.

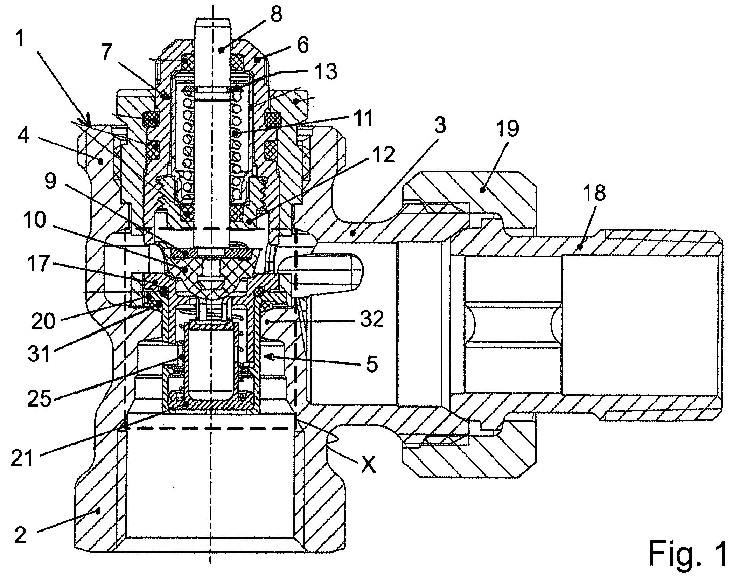

Ein Durchflussmengenregler für eine Heizungsanlage nach Fig. 1 umfasst als wesentliche Komponenten ein Gehäuse 1 mit einem Zulaufstutzen 2 für ein Heizmedium, mit einem Ablaufstutzen 3 und mit einem Voreinstellstutzen 4sowie ein Mengenreguliermodul 5 und eine Handhabe 6. Mithilfe des Mengenreguliermoduls 5 wird eine Durchflussmenge für das Heizmedium verändert. Die Veränderung der Durchflussmenge erfolgt in Abhängigkeit einer Voreinstellung des Mengenreguliermoduls 5 und einer Druckdifferenz. Die Voreinstellung erfolgt über die Handhabe 6.

In dem Gehäuse 1 des Durchflussmengenreglers ist weiter ein Temperaturregelmodul 7 eines Temperaturreglers vorgesehen. Das Temperaturregelmodul 7 umfasst insbesondere einen mit einem nicht dargestellten Temperaturgeber gekoppelten Fühlerstift 8, an dessen dem Mengenreguliermodul 5 zugewandten Ende ein Teller 9 und eine an dem Teller 9 gehaltene Dichtung 10 vorgesehen sind. In Abhängigkeit einer Temperaturvorgabe und einer über den Temperaturfühler erkannten Temperatur wird der Fühlerstift 8 längsbetätigt und infolge der Betätigung des Fühlerstifts 8 von dem Teller 9 und der daran festgelegten Dichtung 10 der Durchfluss des Heizmediums variiert. Die Betätigung des Fühlerstifts 8 erfolgt dabei gegen eine Druckfeder 11. Die Druckfeder 11 stützt sich an einem Verschlussstück 12 des Temperaturregelmoduls 7 ab und ist gegen einen an dem Fühlerstift 8 festgelegten Haltering 13 verspannt. Wie der Temperaturfühler ist ein Einstellelement zur Vorgabe eines Temperaturwerts außerhalb des Gehäuses 1 angeordnet und nicht dargestellt.

Das Heizmedium wird dem Gehäuse 1 und dem darin vorgesehenen Mengenreguliermodul 5 über den Zulaufstutzen 2 zugeführt. Es gelangt über eine erste Durchflussöffnung 14 in einen Wirkraum 15 des Mengenreguliermoduls 5. Das Heizmedium durchströmt ferner eine zweite Durchflussöffnung 16 und gelangt in den Wirkbereich des dem Mengenreguliermodul 5 in Flussrichtung nachgelagerten Temperaturregelmoduls 7. Zudem ist an dem Topf 21 mantelseitig eine Druckausgleichsöffnung 33 ausgebildet, über die das Heizmedium in den Topf 21 einströmt. Infolge der Druckausgleichsöffnung 33entspricht der Druck in dem Topf 21 dem Druck in dem Wirkraum 15.

Vorliegend ist das Temperaturregelmodul 7 vollständig geschlossen. Der Teller 9 mit der Dichtung 10 ist an einem durch einen Reguliereinsatz 17 des Mengenreguliermoduls 5 gebildeten Ventilsitz angelegt. Sofern der Teller 9 mit der Dichtung 10 von dem Reguliereinsatz 17 entfernt wird, bildet sich zwischen dem Reguliereinsatz 17 und der Dichtung 10 eine weitere Durchflussöffnung für das Heizmedium. Das Heizmedium gelangt über die weitere Durchflussöffnung, den Ablaufstutzen 3 und einen Anschlussnippel 18, welcher über eine Mutter 19 an dem Ablaufstutzen 3 festgelegt ist, in die nicht dargestellten weiteren Rohrleitungen der Heizungsanlage.

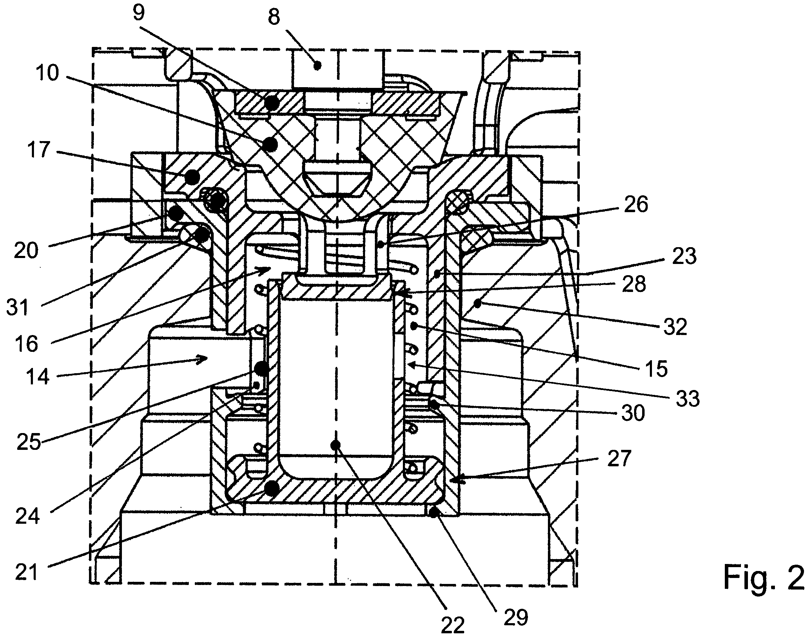

Nachfolgend wird die Funktion des Mengenreguliermoduls 5 dargestellt, wobei ergänzend Bezug genommen wird auf die Detailvergrößerung des Ausschnitts X, welche in Fig. 2 wiedergegeben ist. Das Mengenreguliermodul 5 umfasst als wesentliche Baukomponenten eine die erste Durchflussöffnung 14 aufweisende Hülse 20, den mit dem Temperaturregelmodul 7 zusammenwirkenden Reguliereinsatz 17 sowie einen längsverschiebbar in Bezug zu der Hülse 20 und dem Reguliereinsatz 17 gehaltenen Topf 21.

Der Reguliereinsatz 17 ist in Bezug auf eine durch eine Längsachse des Fühlerstifts 8 definierte Längsmittelachse 22 koaxial zu der Hülse 20 vorgesehen. Der Reguliereinsatz 17 ragt mit einem Steuerabschnitt 23 desselben im Bereich einer dem Temperaturregelmodul 7 zugewandten Stirnseite der Hülse 20 in eben diese. Dabei liegt eine Außenmantelfläche des Steuerabschnitts 23 an einer Innenmantelfläche der Hülse 20 an. Der Reguliereinsatz 17 wirkt derart mit der Handhabe 6 zusammen, dass eine Rotation der Handhabe 6 zu einer Relativverdrehung des Reguliereinsatzes 17 bezogen auf die Hülse 20 führt. Die Längsmittelachse 22 bildet hierbei zugleich eine Drehachse für den Reguliereinsatz 17. Infolge der Rotation des Reguliereinsatzes 17 schiebt sich eine an dem Steuerabschnitt 23 des Reguliereinsatzes 17 vorgesehene Steuerkontur 24 teilweise, vollständig oder gar nicht über die erste Durchflussöffnung 14 und gibt diese teilweise beziehungsweise vollständig frei oder verschließt sie. Insofern ergibt sich abhängig von einer Drehstellung des Reguliereinsatzes 17 ein voreingestellter Durchfluss für das Heizmedium.

Das über die erste Durchflussöffnung 14 in den Wirkraum 15 des Mengenreguliermoduls 5 gelangende Heizmedium umströmt den längsverschiebbar in der Hülse 20 gehaltenen Topf 21 im Bereich einer äußeren Zylindermantelfläche desselben und durchströmt die zweite Durchflussöffnung 16. Hierbei kommt es zu einem Druckverlust, welcher von der Durchflussmenge beziehungsweise dem Volumenstrom abhängt. Infolge des Druckverlusts ist ein Druck im Inneren des Topfes 21 kleiner als im Bereich des Zulaufstutzens 2. Während im Inneren des Topfes 21 der infolge des Durchtritts durch die hinsichtlich ihrer Größe variable erste Durchflussöffnung 14 reduzierte Druck des Wirkraums 15 herrscht, wirkt der im Zulaufstutzen 2 herrschende Druck auf einen Boden des Topfes 21. Infolge der zwischen dem Topfinneren und dem Zulaufstutzen 2 gebildeten Druckdifferenz verschiebt sich der Topf 21 relativ zur Hülse 20 längs und reduziert dabei einen wirksamen Querschnitt der zweiten Durchflussöffnung 16. Infolge der Verringerung des Durchtrittquerschnitts der zweiten Durchflussöffnung sinkt der Durchfluss und die Druckdifferenz reduziert sich. Die zweite Durchflussöffnung 16 ist nach Art eines ringförmigen Zylinder- beziehungsweise Axialspalts gebildet. In die Axialrichtung hat der Axialspalt 16 eine konstante Breite.

Der Topf 21 ist insbesondere durch eine Vorspannfeder 25 vorgespannt. Die Vorspannfeder 25 wird weiter gespannt, wenn der Querschnitt der zweiten Durchflussöffnung 16 sich verringert.

Zum Stützen des Topfes 21 ist an dem Reguliereinsatz 17 im Bereich der zweiten Durchflussöffnung 16 ein Stützabschnitt 26 ausgebildet. Zum Führen des gegenüber der Hülse 20 axial verschiebbaren Topfes 21 ist zwischen der Hülse 20 und dem Topf 21 eine erste Stützstelle 27 und zwischen dem Topf 21 und dem Stützabschnitt 26 des Reguliereinsatzes 17 eine zweite Stützstelle 28 gebildet. Die Stützstellen 27, 28 sind in Richtung der Längsmittelachse 22 beabstandet. Ein Axialhub des Topfes 21 ist insbesondere durch einen innenmantelseitig an der Hülse 20 vorgesehenen ersten Anschlag 29 und optional durch einen ebenso an der Innenmantelfläche der Hülse 20 vorgesehenen zweiten Anschlag 30 begrenzt.

Die Handhabe 6, die an dem Fühlerstift 8 des Temperaturregelmoduls 7 abgestützt ist und drehbar in Bezug zum Fühlerstift 8 gehalten ist, weist eine Glockenform auf und umgibt den Fühlerstift 8 sowie Teile des Temperaturregelmoduls 7 mantelseitig. Das Verschlussstück 12 des Temperaturregelmoduls 7 ist über ein Gewinde an der Handhabe 6 gehalten. Die Übertragung der Drehbewegung der Handhabe 6 auf den Reguliereinsatz 17 erfolgt bevorzugt formschlüssig.

Funktionsnotwendigerweise sind an dem Durchflussmengenregler verschiedene O-Ringe als Dichtungen zwischen benachbarten Bauteilen vorgesehen. Auf die Lage der verschiedenen O-Ringe wird hier nicht näher eingegangen. An die O-Ringe angrenzende Komponenten des Durchflussmengenreglers können einander lagefest und/oder verschiebbar, insbesondere längsverschiebbar oder drehbar, zugeordnet sein. Insbesondere ist ein O-Ring 31 zwischen der Hülse 20 und einem an dem Gehäuse 1 ausgeformten, die Hülse 20 stützenden Stegabschnitt 32 vorgesehen. Der zwischen dem Stegabschnitt 32 und der Hülse 20 vorgesehene O-Ring 31 dient dazu, die Zulaufseite der Heizungsanlage, welcher der Zulaufstutzen 2 zugeordnet ist, von der Ablaufseite der Heizungsanlage, welcher der Ablaufstutzen 3 zugeordnet ist, zu trennen.

Gleiche Bauteile und Bauteilfunktionen sind durch gleiche Bezugszeichen gekennzeichnet.

## Patentansprüche

1. Voreinstellbarer Durchflussmengenregler für eine Heizungsanlage mit einem Gehäuse (1), welches einen Zulaufstutzen (2) für ein Heizmedium, einen Ablaufstutzen (3) für das Heizmedium und einen Voreinstellstutzen (4) aufweist, mit einem Mengenreguliermodul (5), welches in Abhängigkeit von einer Voreinstellung und einer Druckdifferenz einen Durchfluss für das Heizmedium verändern kann, und mit einer Handhabe (6), welche mit einem beweglich angeordneten Bauteil des Mengenreguliermoduls (5) zusammenwirkt zur Voreinstellung des Durchflusses, wobei zur Änderung der Voreinstellung des Durchflusses mittels der Handhabe (6) ein wirksamer Querschnitt einer ersten Durchflussöffnung (14) für das Heizmedium einstellbar ist und wobei zur Regelung des voreingestellten Durchflusses des Heizmediums eine Hülse (20) des Mengenreguliermoduls (5) und ein Topf (21) des Mengenreguliermoduls (5), welche über eine Vorspannfeder (25) federbelastet zueinander vorgesehen sind, zueinander axial verschiebbar angeordnet sind und in Abhängigkeit einer Axialposition, welche mit der Druckdifferenz variiert, ein Querschnitt einer zweiten Durchflussöffnung (16) für das Heizmedium veränderbar ist wobei die erste Durchflussöffnung (14) bezogen auf eine Flussrichtung des Heizmediums vor der zweiten Durchflussöffnung (16) vorgesehen ist, **dadurch gekennzeichnet, dass** der Zufluss zu dem Mengenreguliermodul (5) mantelseitig erfolgt über die an der Hülse (20) vorgesehene erste Dmchflussöffnung (14).

2. Durchflussmengenregler nach Anspruch 1, **dadurch gekennzeichnet, dass** als das mit der Handhabe (6) zusammenwirkende, beweglich angeordnete Bauteil des Mengenreguliermoduls (5) ein verschiebbar in Bezug zu der Hülse (20) angeordneter Reguliereinsatz (17) vorgesehen ist, welcher in Abhängigkeit einer Relativposition von Hülse (20) und Reguliereinsatz (17) den wirksamen Querschnitt der ersten Durchflussöffnung (14) definiert.

3. Durchflussmengenregler nach Anspruch 2, **dadurch gekennzeichnet, dass** der Reguliereinsatz (17) drehbar in Bezug zu der Hülse (20) und dem Topf (21) vorgesehen ist.

4. Durchflussmengenregler nach Anspruch 2 oder 3, **dadurch gekennzeichnet, dass** eine axiale Zuordnung der Hülse (20) zu dem Reguliereinsatz (17) fest vorgegeben ist.

5. Durchflussmengenregler nach einem der Ansprüche 2 bis 4, **dadurch gekennzeichnet, dass** der Reguliereinsatz (17) mit einem Steuerabschnitt (23) in die Hülse (20) eingreift und/oder dass eine Innenmantelfläche der Hülse (20) flächig an einer Außenmantelfläche des Steuerabschnitts (23) anliegt.

6. Durchflussmengenregler nach Anspruch 5, **dadurch gekennzeichnet, dass** an dem Reguliereinsatz (17) im Bereich des Steuerabschnitts (23) eine Steuerkontur (24) vorgesehen ist, welche abhängig von einer Drehstellung des Reguliereinsatzes (17) die erste Durchflussöffnung (14) vollständig freigibt oder jedenfalls teilweise überdeckt zur Voreinstellung des Querschnitts der ersten Durchflussöfnung (14).

7. Durchflussmengenregler nach einem der Ansprüche 1 bis 6, **dadurch gekennzeichnet, dass** die Hülse (20) ortsfest vorgesehen ist und dass der Topf (21) axial verschiebbar gehalten ist.

8. Durchflussmengenregler nach einem der Ansprüche 1 bis 7, **dadurch gekennzeichnet, dass** die Hülse (20) den Topf (21) mantelseitig jedenfalls abschnittsweise umgreift.

9. Durchflussmengenregler nach einem der Ansprüche 1 bis 8, **dadurch gekennzeichnet, dass** die zur Reglung des voreingestellten Durchflusses wirksame und hinsichtlich des Querschnitts veränderbar große zweite Durchflussöffnung-bezogen auf eine Flussrichtung des Heizmediums - (16) zwischen der ersten Durchflussöffnung (14) und dem Ablaufstutzen (3) vorgesehen ist.

10. Durchflussmengenregler nach wenigstens Anspruch 2, **dadurch gekennzeichnet, dass** der Topf (21) zum einen außenmantelseitig an der Hülse (20) und zum anderen innenmantelseitig an einem Stützabschnitt (26) des Reguliereinsatzes (17) axial verschiebbar gehalten ist.

11. Durchflussmengenregler nach wenigstens Anspruch 2, **dadurch gekennzeichnet, dass** zum Führen des gegenüber der Hülse (20) axial verschiebbaren Topfes (21) eine erste Stützstelle (27), welche zwischen der Hülse (20) und dem Topf (21) gebildet ist, und eine zweite Stützstelle (28), welche zwischen dem Topf (21) und dem Reguliereinsatz (17) gebildet ist, vorgesehen sind, und/oder dass die erste Stützstelle (27) und die zweite Stützstelle (28) axial beabstandet zueinander vorgesehen sind.

12. Durchflussmengenregler nach wenigstens Anspruch 2, **dadurch gekennzeichnet, dass** als zweite Durchflussöffuung (16) ein Axialspalt zwischen dem Reguliereinsatz (17) und dem Topf (21) gebildet ist.

13. Durchflussmengenregler nach Anspruch 12, **dadurch gekennzeichnet, dass** der Axialspalt als ein zylindrischer Ringspalt mit einer umlaufend gleichen Breite gebildet ist.

## Claims

1. Pre-adjustable flow regulator for a heating system having a housing (1) that comprises an inlet connecting piece (2) for a heating medium, an outlet connecting piece (3) for the heating medium, and a pre-adjustable connecting piece (4), said heating system having a flow regulating module (5) that in dependence upon a pre-adjustment and a pressure difference can change a throughflow for the heating medium, and said heating system having a handle (6)that cooperates with a component of the flow regulating module (5), said component being arranged in such a manner that it is able to move, so as to pre-adjust the flow, wherein in order to change the pre-adjustment of the throughflow by means of the handle (6) an effective cross-section of a first throughflow opening (14) for the heating medium can be adjusted and wherein in order to regulate the pre-adjusted throughflow of the heating medium a sleeve (20) of the flow regulating module (5) and a pot (21) of the flow regulating module (5), which are provided in a spring-loaded manner with respect to one another by way of a preloading spring (25), are arranged in an axially displaceable manner with respect to one another and in dependence upon an axial position, which varies with the pressure difference, a cross section of a second throughflow opening (16) for the heating medium can be changed, wherein the first throughflow opening (14) is provided with regard to a flow direction of the heating medium upstream of the second throughflow opening (16), **characterized in that** the inflow to the flow regulating module (5) occurs on the periphery side by way of the first throughflow opening (14) that is provided on the sleeve (20).

2. Flow regulator according to Claim 1, **characterized in that** a regulating insert (17) that is arranged in such a manner as to be able to displace with respect to the sleeve (20) is provided as the component of the flow regulating module (5), said component cooperating with the handle (6) and being arranged in such a manner as to be able to move, wherein in dependence upon a relative position of the sleeve (20) and the regulating insert (17) said regulating insert defines the effective cross section of the first throughflow opening (14).

3. Flow regulator according to Claim 2, **characterized in that** the regulating insert (17) is provided in such a manner as to be able to rotate with respect to the sleeve (20) and the pot (21).

4. Flow regulator according to Claim 2 or 3, **characterized in that** an axial arrangement of the sleeve (20) with respect to the regulating insert (17) is provided in a fixed manner.

5. Flow regulator according to any one of Claims 2 to 4, **characterized in that** the regulating insert (17) having a control section (23) engages in the sleeve (20) and/or that an inner peripheral surface of the sleeve (20) lies in a planar manner against an outer peripheral surface of the control section (23).

6. Flow regulator according to Claim 5, **characterized in that** a control contour (24) is provided on the regulating insert (17) in the region of the control section (23) and said control contour completely reveals the first throughflow opening (14) in dependence upon a rotated position of the regulating insert (17) or covers at least in part the first throughflow opening (14) so as to pre-adjust the cross section of the first throughflow opening (14).

7. Flow regulator according to any one of Claims 1 to 6, **characterized in that** the sleeve (20) is provided in an immovable manner and that the pot (21) is held in such a manner as to be able to displace in an axial manner.

8. Flow regulator according to any one of Claims 1 to 7, **characterized in that** the sleeve (20) encompasses the pot (21) on the peripheral side at least in sections.

9. Flow regulator according to any one of Claims 1 to 8, **characterized in that** the large second throughflow opening (16) that is effective for controlling the pre-adjusted throughflow and can be varied with respect to the cross section is provided - with regard to a flow direction of the heating medium - between the first throughflow opening (14) and the outlet connecting piece (3).

10. Flow regulator according to at least Claim 2, **characterized in that** the pot (21) is held on the one hand on the outer peripheral side of the sleeve (20) and on the other hand on the inner peripheral side of a supporting section (26) of the regulating insert (17) in such a manner that said pot can displace in an axial manner.

11. Flow regulator according to at least Claim 2, **characterized in that** in order to guide the pot (21) that can displace in an axial manner with respect to the sleeve (20) a first supporting site (27) that is formed between the sleeve (20) and the pot (21), and a second supporting site (28) that is formed between the pot (21) and the regulating insert (17)are provided, and/or that the first supporting site (27) and the second supporting site (28) are provided spaced apart from one another in an axial manner.

12. Flow regulator according to at least Claim 2, **characterized in that** an axial gap is formed as a second throughflow opening (16) between the regulating insert (17) and the pot (21).

13. Flow regulator according to Claim 12, **characterized in that** the axial gap is formed as a cylindrical annular gap with a circumferential identical width.

## Revendications

1. Régulateur de débit préréglable pour une installation de chauffage, comportant un boîtier (1), lequel présente un embout d'arrivée (2) pour un fluide de chauffage, un embout de sortie (3) pour le fluide de chauffage et un embout de préréglage (4), comportant un module de régulation de débit (5), lequel peut modifier un débit pour le fluide de chauffage en fonction d'un préréglage et d'une différence de pression, et comportant une manette (6), laquelle coopère avec un composant disposé de manière mobile du module de régulation de débit (5) pour le préréglage du débit, dans lequel, pour la modification du préréglage du débit au moyen de la manette (6), une section active d'un premier orifice d'écoulement (14) du fluide de chauffage est réglable et dans lequel, pour le réglage du débit préréglable du fluide de chauffage, une douille (20) du module de régulation de débit (5) et un pot (21) du module de réglage de débit (5), lesquels sont ménagés de manière contrainte par ressort l'un par rapport à l'autre par l'intermédiaire d'un ressort de précontrainte (25), sont disposés de manière axialement coulissante l'un par rapport à l'autre, et, en fonction d'une position axiale, laquelle varie avec la différence de pression, une section d'un deuxième orifice d'écoulement (16) du fluide de chauffage est modifiable, dans lequel le premier orifice d'écoulement (14), par rapport à un sens d'écoulement du fluide de chauffage, est ménagé en amont du deuxième orifice d'écoulement (16), **caractérisé en ce que** l'écoulement vers le module de régulation de débit (5) est réalisé côté enveloppe par l'intermédiaire du premier orifice d'écoulement (14) ménagé sur la douille (20).

2. Régulateur de débit selon la revendication 1, **caractérisé en ce qu'**un insert de régulation (17) disposé de manière coulissante par rapport à la douille (20) est ménagé en tant que le composant du module de régulation de débit (5) disposé de manière mobile coopérant avec la manette (6), lequel insert de régulation définit la section active du premier orifice d'écoulement (14) en fonction d'une position relative de la douille (20) et de l'insert de régulation (17).

3. Régulateur de débit selon la revendication 2, **caractérisé en ce que** l'insert de régulation (17) est ménagé de manière rotative par rapport à la douille (20) et au pot (21).

4. Régulateur de débit selon la revendication 2 ou 3, **caractérisé en ce qu'**une attribution axiale de la douille (20) par rapport à l'insert de régulation (17) est définie de manière fixe.

5. Régulateur de débit selon l'une quelconque des revendications 2 à 4, **caractérisé en ce que** l'insert de régulation (17) s'engage dans la douille (20) à l'aide d'une section de commande (23) et/ou **en ce qu'**une surface d'enveloppe intérieure de la douille (20) s'appuie de manière plane contre une surface d'enveloppe extérieure de la section de commande (23).

6. Régulateur de débit selon la revendication 5, **caractérisé en ce que** sur l'insert de régulation (17) est ménagé un contour de commande (24) au niveau de la section de commande (23), lequel libère entièrement le premier orifice d'écoulement (14) en fonction d'une position de rotation de l'insert de régulation (17) ou, en tout cas, le recouvre en partie pour le préréglage de la section du premier orifice d'écoulement (14).

7. Régulateur de débit selon l'une quelconque des revendications 1 à 6, **caractérisé en ce que** la douille (20) est ménagée de manière stationnaire et **en ce que** le pot (21) est maintenu de manière axialement coulissante.

8. Régulateur de débit selon l'une quelconque des revendications 1 à 7, **caractérisé en ce que** la douille (20) entoure le pot (21) côté enveloppe, en tout cas par sections.

9. Régulateur de débit selon l'une quelconque des revendications 1 à 8, **caractérisé en ce que** le deuxième grand orifice d'écoulement, actif pour la régulation du débit préréglé et modifiable au regard de la section - par rapport à un sens d'écoulement du fluide de chauffage (16) - est ménagé entre le premier orifice d'écoulement (14) et l'embout de sortie (3).

10. Régulateur de débit selon au moins la revendication 2, **caractérisé en ce que** le pot (21) est maintenu de manière axialement coulissante, d'une part sur la douille (20), côté enveloppe extérieure, et d'autre part sur une section d'appui (26) de l'insert de régulation (17), côté enveloppe intérieure.

11. Régulateur de débit selon au moins la revendication 2, **caractérisé en ce que** pour guider le pot (21) axialement coulissant par rapport à la douille (20), un premier point d'appui (27), lequel est formé entre la douille (20) et le pot (21), et un deuxième point d'appui (28), lequel est formé entre le pot (21) et l'insert de régulation (17), sont ménagés, et/ou **en ce que** le premier point d'appui (27) et le deuxième point d'appui (28) sont ménagés avec écart axial l'un par rapport à l'autre.

12. Régulateur de débit selon au moins la revendication 2, **caractérisé en ce qu'**une fente axiale est formée entre l'insert de régulation (17) et le pot (21) en tant que deuxième orifice d'écoulement (16).

13. Régulateur de débit selon la revendication 12, **caractérisé en ce que** la fente axiale est formée en tant qu'une fente annulaire cylindrique ayant une même largeur périphérique.
